# EUROPÄISCHE PATENTSCHRIFT

(11) **EP 3 185 183 B1**
(45) Veröffentlichungstag und Bekanntmachung des Hinweises auf die Patenterteilung: **24.04.2019**
(21) Anmeldenummer: 16002661.3
(22) Anmeldetag: 15.12.2016
(51) Int. Cl.: G06K 19/07, G06K 19/077

(54) **VERFAHREN ZUR ANSTEUERUNG EINES LEUCHTMITTELS EINES TRAGBAREN DATENTRÄGERS**
METHOD FOR CONTROLLING A LIGHT OF A PORTABLE DATA CARRIER
PROCÉDÉ DE COMMANDE D'UN ÉCLAIRAGE D'UN SUPPORT D'INFORMATIONS PORTATIF

(30) Priorität: 23.12.2015 DE 102015016741
(43) Veröffentlichungstag der Anmeldung: 28.06.2017
(73) Patentinhaber: Giesecke+Devrient Mobile Security GmbH, 81677 München (DE)
(72) Erfinder: Rankl, Wolfgang, 81825 München (DE)

(56) Entgegenhaltungen:
- US-A1- 2009 245 029
- US-B1- 6 752 321

## Beschreibung

Die Erfindung betrifft ein Verfahren zur Ansteuerung mindestens eines Leuchtmittels, z.B. einer Leuchtdiode, die auf einem tragbaren Datenträger, z.B. einer Chipkarte angeordnet ist.

Aus dem Stand der Technik sind Chipkarten mit Mikrocontroller und einer oder mehreren in die Karte integrierten ein- oder mehrfarbigen Leuchtdiode bekannt. Solche Chipkarten sind beispielsweise als Kreditkarten oder Bankkarten in Verwendung.

Die in heutigen Chipkarten verwendeten Leuchtdioden werden entweder direkt mit einer Antennenspule oder mit einem Mikrocontroller der Karte verbunden und angesteuert.

Bei der Verbindung der Leuchtdiode mit der Antennenspule ist nur die Anzeige möglich, dass sich die Karte im elektromagnetischen Feld eines Terminals, z.B. eines Bankterminals, befindet, eine weitere Kommunikation mit einem Benutzer ist damit nicht realisierbar.

Bei der Verbindung der Leuchtdiode mit dem Mikrocontroller ist eine Ansteuerung der Leuchtdiode mit einem bestimmten Ereignis verbunden, d.h. die Leuchtdiode wird ein oder ausgeschaltet bzw. leuchtet in einer bestimmten Farbe in Abhängigkeit von dem Ereignis, z.B. die Chipkarte ist in Betrieb.

US 2009/0245029 A1 offenbart ein Verfahren und eine Vorrichtung um einen Benutzer an eine Handlung zu erinnern. Die Vorrichtung ist eine Smartcard. Die Smartcard besteht aus einem Kartenkörper, in den ein Mikroprozessor und eine Energiequelle integriert sind. Zusätzlich ist eine Alarmierungsvorrichtung, wie z.B. ein Blitzlicht integriert, um den Benutzer auf die durchzuführende Handlung hinzuweisen.

US 6,752,321 B1 offenbart eine Smartcard, die einen Kartenkörper umfasst, in den eine integrierte Schaltung integriert ist. Sobald die Karte in einen Kartenleser eingesteckt wird, nimmt die Schaltung eine Kommunikation mit dem Kartenleser auf. Die integrierte Schaltung betreibt wenigstens eine mehrfarbige Leuchtdiode. Die Leuchtdiode zeigt Transaktionen zwischen der Smartcard und einem USB-Anschluss des Kartenlesers an. Ferner moduliert die integrierte Schaltung die mehrfarbige Leuchtdiode basierend auf Befehlen der Smartcard und/oder Transaktionen zwischen der Smartcard und dem USB-Anschluss des Lesegeräts.

Problematisch ist, dass ein Benutzer selbst nicht bestimmen kann, unter welchen Betriebsbedingungen das Leuchtmittel ein- oder ausgeschaltet wird oder in welcher Farbe das Leuchtmittel leuchtet.

Es ist daher Aufgabe der vorliegenden Erfindung eine Lösung zu finden, dass ein Benutzer selbst bestimmen kann, unter welchen Betriebsbedingungen des tragbaren Datenträgers das Leuchtmittel ein- oder ausgeschaltet wird bzw. in welcher Farbe das Leuchtmittel leuchtet.

Diese Aufgabe wird durch ein Verfahren mit den Merkmalen des unabhängigen Anspruchs gelöst. In den davon abhängigen Ansprüchen sind vorteilhafte Ausgestaltungen und Weiterbildungen der Erfindung angegeben.

Das erfindungsgemäße Verfahren ermöglicht ein Betreiben mindestens eines Leuchtmittels, welches in einem tragbaren Datenträger, z.B. einer Chipkarte, einer Bankkarte oder Kreditkarte, angeordnet ist. Der Datenträger weist einen Chip auf, welcher eine Verarbeitungseinheit zur Verarbeitung von Daten und einen Speicher zum Speichern von Daten umfasst. Ferner weist der Datenträger mindestens eine kontaktlose und/oder eine kontaktgebundene Schnittstelle zur Übertragung von Daten zwischen dem Chip und einem Terminal, z.B. einem Bankterminal auf, wobei der Chip mit der Schnittstelle verbunden ist. Als kontaktlose Schnittstelle kommt z.B. eine Antennenspule im Inneren des Datenträgers in Frage. Eine kontaktgebundene Schnittstelle ist z.B. eine Schnittstelle gemäß ISO 7816, wie sie beispielsweise von Bankkarten bekannt ist. Der Datenträger wird mit Energie versorgt, indem über die Schnittstelle Energie auf den Datenträger übertragen wird und/oder im Datenträger eine Batterie angeordnet ist. Der Chip ist mit dem Leuchtmittel verbunden, um es ein- oder auszuschalten bzw. um eine Farbe des Leuchtmittels einzustellen. Im Speicher des Chips ist eine Datei abgespeichert, welche Betriebsbedingungen des Datenträgers definiert, unter welchen Betriebsbedingungen welches Leuchtmittel, wie lange und in welcher Farbe leuchtet. Die Datei wird gewöhnlich während der Personalisierung des Datenträgers im Chip gespeichert, kann aber auch erst zu einem späteren Zeitpunkt im Chip gespeichert werden. Das Speichern nach der Herstellung oder Personalisierung des Datenträgers ermöglicht ein flexibles Anpassen der Betriebsbedingungen, wann welches Leuchtmittel in welcher Farbe leuchtet gemäß den individuellen Bedürfnissen des jeweiligen Benutzers. Somit ist ein Benutzer unabhängig von den vorgegebenen Betriebsbedingungen durch einen Hersteller des tragbaren Datenträgers, die während der Herstellung oder Personalisierung im Chip abgespeichert wurden.

Ein großer Vorteil ist, dass die Betriebsbedingungen von dem Benutzer des Datenträgers selbst verändert und im Chip wieder abgespeichert werden können. Somit kann jeder Benutzer selbst bestimmen unter welchen Betriebsbedingungen des Datenträgers welches Leuchtmittel wann ein- und/oder ausgeschaltet wird und in welcher Farbe das Leuchtmittel leuchtet. Zur Veränderung der Betriebsbedingungen durch den Benutzer wird die Chipkarte mit einem Lesegerät über die kontaktlose und/oder kontaktgebundene Schnittstelle verbunden, sodass der Benutzer über eine Tastatur und einen Bildschirm eines Rechners, der mit dem Lesegerät verbunden ist, die Betriebsbedingungen verändern und im Chip des Datenträgers speichern kann, welche das Leuchten des Leuchtmittels bestimmen.

Erfindungsgemäß werden die Betriebsbedingungen in einer Datei abgespeichert, welche eine Datendatei gemäß ISO/IEC 7816-4 ist. Eine Datendatei gemäß ISO/IEC 7816-4 ermöglicht eine hohe Kompatibilität und einfache Verarbeitbarkeit der Betriebsbedingungen mit den bei Chipkarten üblicherweise verbreiteten Betriebssystemen.

Deshalb ist es besonders vorteilhaft, wenn die Datendatei gemäß ISO 7816-4 mit den vom Benutzer vorgegebenen Betriebsbedingungen ein sogenanntes Elementary File ist, welche in einer linear fixed oder einer linear variable Datenstruktur abgespeichert ist. Zur weiteren detaillierten Beschreibung einer Datendatei gemäß ISO 7816-4, eines Elementary Files mit einer linear fixed oder einer linear variable Datenstruktur sei auf die einschlägigen Normen oder Literatur, wie z.B. das "Handbuch der Chipkarten" von Wolfgang Rankl und Wolfgang Effing, erschienen im Hanser Verlag, verwiesen.

Damit die Betriebsbedingungen nicht von Unbefugten verändert werden, ist ein Zugriff auf die Datei durch ein Passwort oder eine Geheimzahl, wie z.B. eine PIN-Nummer geschützt.

Als Leuchtmittel wird vorteilhaft eine Leuchtdiode verwendet, da sie leicht in einen tragbaren Datenträger einzubauen ist und ihr Leuchten von einem Benutzer optisch gut erkannt wird. Gleichwohl können alle anderen geeigneten Leuchtmittel genauso verwendet werden, wie z.B. Anzeigeelemente.

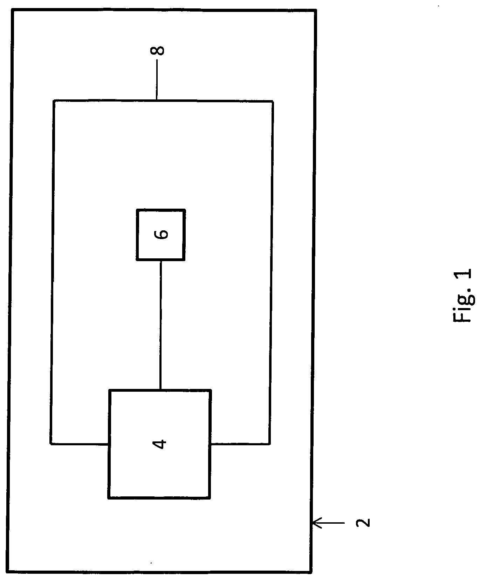

Weitere Merkmale und Vorteile der Erfindung ergeben sich aus der folgenden Beschreibung erfindungsgemäßer Ausführungsbeispiele, sowie weiteren Ausführungsalternativen im Zusammenhang mit der folgenden Figur 1, die eine prinzipielle Struktur eines erfindungsgemäßen tragbaren Datenträgers zeigt.

Figur 1 zeigt einen erfindungsgemäßen tragbaren Datenträger 2, wie z.B. eine Kreditkarte, Bankkarte, Pass, Identitätskarte, Sozialversicherungsausweis, Chipmodul, Personalausweis, Reisepass, SIM-Karte etc. Der Datenträger 2 weist einen Chip 4, der mit einem Leuchtmittel 6 und einer Schnittstelle 8 verbunden ist. In Figur 1 ist die Schnittstelle 8 als kontaktlose Schnittstelle in Form einer Antennenspule ausgebildet. Alternativ oder zusätzlich kann die Schnittstelle auch als kontaktgebundene Schnittstelle z.B. gemäß ISO 7816 ausgebildet sein.

Im Chip 4 sind in einer Datei die Betriebsbedingungen gespeichert, in Abhängigkeit davon das Leuchtmittel 6 ein- und ausgeschaltet wird bzw. in welcher Farbe das Leuchtmittel 6 leuchtet. Es kann mindestens ein Leuchtmittel 6 auf dem Datenträger 2 vorhanden sein. Als Leuchtmittel 6 kommt beispielsweise eine Leuchtdiode oder jedes andere geeignete Leuchtmittel in Frage.

Wesentlich an der Erfindung ist, dass der Benutzer selbst bestimmt, unter welchen Betriebsbedingungen das Leuchtmittel 6 ein- und ausgeschaltet wird bzw. in welcher Farbe das Leuchtmittel 6 leuchtet.

Dazu kann der Benutzer die Datei verändern, in welcher die Betriebsbedingungen festgelegt sind, wann das Leuchtmittel 6 ein- und ausgeschaltet wird, bzw. in welcher Farbe das Leuchtmittel 6 leuchtet. Die Datei ist deshalb gemäß ISO 7816-4, als Datendatei, insbesondere als ein sogenanntes Elementary File ausgeführt. Das Elementary File hat eine Record-orientierte Struktur, wobei die linear fixed oder die linear variable Struktur für die vorliegende Erfindung bevorzugt werden.

Die Datei ist vor einer unbefugten Veränderung zugriffsgeschützt, indem nur dann ein Schreibzugriff möglich ist, wenn z.B. ein Passwort oder eine Geheimzahl eingegeben wird.

Die Datei steuert entsprechend der vorliegenden Betriebsbedingungen bzw. der auftretenden Ereignisse während des Betriebs das Leuchtmittel 6.

Im Folgenden sollen deshalb beispielhaft Betriebsbedingungen bzw. Ereignisse beschrieben werden, welche die Steuerung des Leuchtmittels 6 beschreiben.

Ein einfacher Fall ist, wenn der Datenträger 2 in ein elektromagnetisches Feld eines Terminals, z.B. eines Lesegeräts mit einer kontaktlosen Schnittstelle, eingebracht wird und das Leuchtmittel 6 durch ein Leuchten das Einbringen des Datenträgers 2 in das elektromagnetische Feld anzeigt. Alternativ ist es vorstellbar, dass eine Feldstärke des Terminals angezeigt wird, z.B. durch die Farben grün, gelb, rot, um den Benutzer zu informieren, ob er den Datenträger 2 optimal an eine Antenne des kontaktlos arbeitenden Terminals hält.

In einem weiteren Ausführungsbeispiel kann dem Benutzer des Datenträgers 2 ein vorhandenes Guthaben mittels einer Farbkodierung durch das Leuchtmittel 6 angezeigt werden. Wenn z.B. mehr als ein bestimmter, vom Benutzer festgelegter Betrag eines Guthabens auf einem Konto des Benutzers vorhanden ist, dann leuchtet das Leuchtmittel 6 in grüner Farbe, andernfalls in roter Farbe. Dies wäre eine unmittelbare und einfache Information für den Benutzer des tragbaren Datenträgers 2 über den aktuell vorhandenen Stand des verfügbaren Guthabens.

Im Falle einer Onlinetransaktion kann der aktuelle Stand eines Bankkontos farblich codiert wiedergegeben werden, zum Beispiel bei ausreichendem Guthaben leuchtet das Leuchtmittel 6 grün, ab einer gewissen festzulegenden Schwelle in gelber Farbe und bei einer Überziehung des Kontos leuchtet das Leuchtmittel 6 in roter Farbe. Zusätzlich zu den unterschiedlichen Farben ist hier auch ein zeitliches Verhalten des Leuchtmittels 6 vorstellbar. Beispielsweise könnte eine Blinkfrequenz des Leuchtmittels 6 durch einen aktuellen Kontostand gesteuert werden, z.B. ist die Blinkfrequenz umso höher je mehr Guthaben vorhanden ist. Durch die Möglichkeit der vom Benutzer festzulegenden Regeln ist es im Übrigen für einen unbeteiligten Beobachter nicht nachvollziehbar, was durch das Leuchtmittel 6 jeweils signalisiert wird.

Mittels des Leuchtmittels 6 kann auch eine Art der Transaktion dargestellt werden. So kann beispielsweise durch eine bestimmte Farbe oder durch eine bestimmte Blinkfrequenz des Leuchtmittels 6 eine Online-, Offline- oder eine Lastschrift-Transaktion angezeigt werden. Ferner kann durch das Leuchtmittel 6 angezeigt werden, ob Bonuspunkte bei einem Einkauf gutgeschrieben wurden.

Ein weiteres vorteilhaftes Ausführungsbeispiel ist, dass das Leuchtmittel 6 anzeigt, dass eine SMS mit weiteren Zahlungsinformationen von einem Hintergrundsystem an den Benutzer des tragbaren Datenträgers 2 versendet wurde.

Ein weiteres vorteilhaftes Ausführungsbeispiel der vorliegenden Erfindung ist, dass das Leuchtmittel 6 eine bestimmte Farbe oder eine bestimmte zeitliche Farbfolge anzeigt, wenn sich ein Terminal gegenüber dem Datenträger 2 authentisiert hat. Damit wird dem Benutzer des Datenträgers 2 vor der Eingabe einer PIN signalisiert, ob das Terminal authentisch ist.

Beim Start des Betriebs des Datenträgers 2 kann das Leuchtmittel 6 beim Einschalten mit einer bestimmten Farbe leuchten oder in einer bestimmten zeitlichen Abfolge ein bestimmtes farbliches Leuchten aufweisen. So ist es zum Beispiel alternativ möglich, dass das Leuchtmittel 6 eine Blinkfolge vergleichbar eines Morsecodes aufweist und die auf dem Leuchtmittel 6 dargestellte Farbe bei jedem Buchstaben verändert wird, zum Beispiel von blau über rot nach grün gewechselt wird.

Der Benutzer hat somit mit der vorliegenden Erfindung die Möglichkeit das auf dem Datenträger 2 vorhandene Leuchtmittel 6, zum Beispiel eine oder mehrere Leuchtdioden, anhand bestimmter und von ihm festzulegender Regeln für die einfache und schnelle Signalisierung bestimmter Zustände während des Betriebs des tragbaren Datenträgers 2 zu nutzen.

### Bezugszeichenliste

- 2: tragbarer Datenträger
- 4: Chip
- 6: Leuchtmittel, z.B. eine Leuchtdiode
- 8: Schnittstelle, z.B. eine Antennenspule

## Patentansprüche

1. Verfahren zum Betreiben mindestens eines Leuchtmittels (6), welches in einem tragbaren Datenträger (2) angeordnet ist,
wobei der Datenträger (2) einen Chip (4) aufweist, welcher eine Verarbeitungseinheit zur Verarbeitung von Daten und einen Speicher zum Speichern von Daten aufweist,
wobei der Datenträger (2) mindestens eine kontaktlose und/oder eine kontaktgebundene Schnittstelle (8) zur Übertragung von Daten zwischen dem Chip (4) und einem Terminal aufweist,
wobei der Chip (4) mit der Schnittstelle (8) verbunden ist, wobei der Datenträger (2) mit Energie versorgt wird, indem über die Schnittstelle (8) Energie auf den Datenträger (2) übertragen wird und/oder der Datenträger (2) eine Batterie aufweist,
wobei der Chip (4) ferner mit dem Leuchtmittel (6) verbunden ist, um das Leuchtmittel (6) ein- und auszuschalten,
**dadurch gekennzeichnet, dass** im Speicher des Chips (4) eine Datei abgespeichert ist, wobei die Datei Betriebsbedingungen des Datenträgers (2) definiert, unter welchen Betriebsbedingungen welches Leuchtmittel (6), wie lange und in welcher Farbe leuchtet,
wobei die Datei während der Personalisierung des Datenträgers (2) im Chip (4) gespeichert wird,
wobei die Betriebsbedingungen von einem Benutzer des Datenträgers (2) verändert und im Chip (4) abgespeichert werden,
wobei die Datei als eine Datendatei gemäß ISO/IEC 7816-4 abgespeichert wird,
wobei die Datendatei als ein Elementary File abgespeichert wird.

2. Verfahren nach Anspruch 1, **dadurch gekennzeichnet, dass** die Datendatei in einer linear fixed oder linear variable Dateistruktur abgespeichert wird.

3. Verfahren nach einem der Ansprüche 1 bis 2, **dadurch gekennzeichnet, dass** die Datei vor einem unbefugten Zugriff geschützt ist, indem vor Veränderung der Datei ein Passwort oder eine Geheimzahl eingegeben werden muss.

4. Verfahren nach einem der Ansprüche 1 bis 3, **dadurch gekennzeichnet, dass** als Leuchtmittel (6) eine Leuchtdiode verwendet wird.

## Claims

1. A method for operating at least one illuminant (6) which is arranged in a portable data carrier (2),
wherein the data carrier (2) has a chip (4) which has a processing unit for processing data and a memory for storing data,
wherein the data carrier (2) has at least one contactless and/or one contact-type interface (8) for transferring data between the chip (4) and a terminal,
wherein the chip (4) is connected to the interface (8),
wherein the data carrier (2) is supplied with energy by energy being transferred via the interface (8) to the data carrier (2) and/or by the data carrier (2) having a battery,
wherein the chip (4) is further connected to the illuminant (6) to switch the illuminant (6) on and off,
**characterized in that** in the memory of the chip (4) a file is stored, wherein the file defines operating conditions of the data carrier (2), under which operating conditions which illuminant (6) glows for how long and in which color,
wherein during the personalization of the data carrier (2) the file is stored in the chip (4),
wherein the operating conditions are changed by a user of the data carrier (2) and stored in the chip (4),
wherein the file is stored as a data file according to ISO/IEC 7816-4,
wherein the data file is stored as an elementary file.

2. The method according to claim 1, **characterized in that** the data file is stored in a linearly fixed or linearly variable file structure.

3. The method according to any of claims 1 to 2, **characterized in that** the file is protected from an unauthorized access by having to enter a password or a secret code before changing the file.

4. The method according to any of claims 1 to 3, **characterized in that** a light-emitting diode is employed as the illuminant (6).

## Revendications

1. Procédé destiné à faire fonctionner au moins un agent lumineux (6) agencé dans un support de données (2) portable,
cependant que le support de données (2) portable comporte une puce (4) qui comporte une unité de traitement pour le traitement de données et une mémoire pour la mémorisation de données,
cependant que le support de données (2) comporte au moins une interface (8) sans contact et/ou avec contact pour la transmission de données entre la puce (4) et un terminal,
cependant que la puce (4) est reliée à l'interface (8),
cependant que le support de données (2) est alimenté en énergie, ce qui à lieu en ce que, par le biais de l'interface (8), de l'énergie est transmise sur le support de données (2) et/ou que le support de données (2) comporte une pile,
cependant que la puce (4) est en outre reliée à l'agent lumineux (6) afin d'allumer et d'éteindre l'agent lumineux (6),
**caractérisé en ce que**, dans la mémoire de la puce (4), un fichier est mémorisé, cependant que le fichier définit des conditions de fonctionnement du support de données (2) établissant sous quelles conditions de fonctionnement quel agent lumineux (6) luit pendant combien de temps et en quelle couleur,
cependant que le fichier est mémorisé pendant la personnalisation du support de données (2) dans la puce (4),
cependant que les conditions de fonctionnement sont, par un utilisateur du support de données (2), modifiées et mémorisées dans la puce (4),
cependant que le fichier est mémorisé en tant qu'un fichier de données conformément à ISO/IEC 7816-4,
cependant que le fichier est mémorisé en tant qu'un Elementary File.

2. Procédé selon la revendication 1, **caractérisé en ce que** le fichier de données est mémorisé dans une structure de données linear fixed ou linear variable.

3. Procédé selon une des revendications de 1 à 2, **caractérisé en ce que** le fichier est protégé contre un accès non autorisé, ce qui a lieu **en ce que**, avant une modification du fichier, un mot de passe ou un numéro secret doit être entré.

4. Procédé selon une des revendications de 1 à 3, **caractérisé en ce qu'**en tant qu'agent lumineux (6), c'est une diode lumineuse qui est utilisée.
